# EUROPÄISCHE PATENTSCHRIFT

(11) **EP 0 897 266 B1**
(45) Veröffentlichungstag und Bekanntmachung des Hinweises auf die Patenterteilung: **06.12.2000**
(21) Anmeldenummer: 97921758.5
(22) Anmeldetag: 24.04.1997
(51) Int. Cl.: A21B 5/02

(54) **BACKFORM**
BAKING MOULD
MOULE A PATISSERIE

(30) Priorität: 08.05.1996 DE 19618545
(43) Veröffentlichungstag der Anmeldung: 24.02.1999
(73) Patentinhaber: FVP Formverpackung GmbH, 01445 Radebeul (DE)
(72) Erfinder: DUBBERT, Frank, D-01468 Reichenberg (DE)
(74) Vertreter: Rupp, Christian, Dipl.Phys.
(86) Internationale Anmeldenummer: EP9702121
(87) Internationale Veröffentlichungsnummer: WO9741734

(56) Entgegenhaltungen:
- EP-A- 0 752 209
- WO-A-88/00797
- DE-A- 4 421 200

## Beschreibung

Die Erfindung betrifft eine Backform die ein Formoberteil und Formunterteil aufweist, wobei zwischen dem Formoberteil und dem Formunterteil bei geschlossener Backform ein Backraum begrenzt ist.

Mit Backformen der eingangs genannten Art ist es möglich, aus einem Teigmaterial ein im folgenden als Formteil bezeichnetes Backerzeugnis mit einer dem Backraum entsprechenden Gestalt zu schaffen. Insbesondere ist es möglich, vermittels einer derartigen Backform biologisch vollständig abbaubare, dünnwandige Formkörper oder Formverpackungen als Einweg-Gebrauchsartikel wie beispielsweise Teller oder Becher sowie Formverpackungen oder zum Verzehr vorgesehene Gebäckstücke, insbesondere Waffeln bzw. Waffelformkörper zu schaffen.

Bei der Herstellung derartiger Formteile bzw. Back-Erzeugnisse ist es bislang erforderlich, ggf. durch manuelles Nachsortieren oder durch eine entsprechende Überdimensionierung der Wandstärken der Formteile sicherzustellen, daß die Formteile bestimmte Kriterien wie beispielsweise eine ausreichende mechanische Mindestfestigkeit sowie eine gewünschte Oberflächenqualität aufweisen. Diese Endkontrolle erfolgt üblicherweise im Rahmen einer Nachbearbeitung der Formteile, bei welcher die den Formteilen anhaftenden Abschnitte aus überschüssigem Teigmaterial entfernt werden.

Die vorangehend angegebene manuell durchgeführte Nachbearbeitung und Überprüfung der Formteile erweist sich jedoch unter wirtschaftlichen Gesichtspunkten als ungünstig und konnte bislang nicht in zuverlässiger Weise automatisiert werden.

Unter dem Eindruck dieser Problematik liegt der Erfindung die Aufgabe zugrunde, eine Backform der eingangs genannten Art zu schaffen, durch welche die entsprechenden Formteile auf zuverlässigere Weise hergestellt werden können, so daß auf eine nachträgliche Prüfung der Formteile sowie auf eine Nachbearbeitung derselben weitestgehend verzichtet werden kann.

Diese Aufgabe wird bei einer Backform der eingangs genannten Art erfindungsgemäß dadurch gelöst, daß bei geschlossener Backform das Formoberteil entlang einer Umfangs-Formkontur in das Formunterteil eingetaucht oder das Formunterteil entlang einer Umfangs-Formkontur in das Formoberteil eingetaucht ist.

Dadurch wird es auf vorteilhafte Weise möglich, eine einwandfreie Backprozedur beim Ausbacken des in dem Backraum aufgenommenen Teigmateriales zu gewährleisten, so daß selbst extrem dünnwandige Formteile zuverlässig gefertigt werden können. Zudem wird auf besonders vorteilhafte Weise ein unkontrollierter Masseaustritt aus dem Backraum vermieden, so daß sich zum einen keine unerwünschten bzw. nur sehr kleine Ansätze an dem entsprechend geformten Formteil bilden, und zum anderen eine unerwünschte Verschmutzung des Schließbereiches der Backform vermieden werden kann. Durch die erfindungsgemäß vorgeschlagene Backform wird es auf zuverlässige Weise möglich, bei einer üblichen Backtemperatur von 200°C einen Backdruck von ca. 4 bar aufzubauen, wobei der erfindungsgemäß erreichte Schließeffekt zwischen dem Formoberteil und dem Formunterteil in vorteilhafter Weise von dem sich in dem Backraum befindenden und bis an den, durch die beiden Formhälften definierten Schließspalt vordringenden Material unterstützt wird. Zudem wird auf überraschend einfache Weise vermieden, daß im Schließbereich zwischen Formoberteil und Formunterteil ein Formverschleiß auftritt.

Eine im Hinblick auf den Schließeffekt besonders vorteilhafte Ausführungsform der Backform nach der vorliegenden Erfindung ist dadurch gegeben, daß sich an die Umfangsform-Konturen von Formober- und Formunterteil im wesentlichen neigungsgleiche Schließflächen anschließen. Dadurch wird es auf einfach Weise möglich, durch Einstellen der Eindringtiefe der beiden Formteile ineinander das sich zwischen den beiden Formteilen einstellende Spaltmaß präzise zu justieren und dadurch bestimmten Eigenarten der jeweils verwendeten Füllmaterial- bzw. Rohmassenmischung Rechnung zu tragen. Die erfindungsgemäß vorgeschlagene Ausgestaltung der Umfangs-Formkonturen von Formober- und Formunterteil erweist sich auch unter fertigungstechnischen Gesichtspunkten als besonders günstig. Zudem läßt sich der so gebildete Spaltbereich auf günstige Weise reinigen.

Eine besonders vorteilhafte Auslegung der Backform nach der Erfindung ist dadurch gegeben, daß bei geschlossener Backform zwischen den korrespondierenden Schließflächen von Formober- und Formunterteil ein Schließspalt von etwa 0,01 mm bis 0,05 mm vorgesehen ist. Dadurch wird auf günstige Weise eine zusätzliche und unterstützende Dampfdurchlässigkeit des Schließspaltes erreicht, und zudem ein unerwünschter Durchtritt des in dem Backraum aufgenommenen Materiales durch den Schließspalt vermieden. Die Spaltweite des Schließspaltes wird erfindungsgemäß im Hinblick auf rezepturbedingte Faktoren der jeweils verwendeten Backmasse sowie im Hinblick auf das Backraumvolumen festgelegt.

Eine im Hinblick auf ein zuverlässiges Verschließen der Backform vorteilhafte Ausführungsform der Erfindung ist dadurch gegeben, daß eine Eintauchtiefe des Formoberteiles in das Formunterteil bzw. Formunterteiles in das Formoberteil im Bereich der Schließkontur etwa 2 mm bis 5 mm beträgt. Dadurch wird in vorteilhafter Weise sichergestellt, daß der sich entlang der Umfangs-Formkontur erstreckende Schließspalt im gesamten Umfangsbereich sowohl ein im wesentlichen konstantes Durchlässigkeitsverhalten für Wasserdampf (bzw. den Verdampfungsprozeß) wie auch ein konstantes Dichtverhalten gegen austretende Formmasse aufweist.

Eine im Hinblick auf ein günstiges Schließverhalten besonders vorteilhafte Ausführungsform der erfindungsgemäßen Backform ist dadurch gegeben, daß ein Neigungswinkel der Schrägflächen von Formober- und Formunterteil etwa 1,5° bis 5° beträgt. Dadurch wird ein extrem präzises Einstellen des Schließspaltes sowie ein kraftsparendes Öffnen der beiden Formteile möglich. Gemäß einer weiteren bevorzugten Ausführungsform der erfindungsgemäßen Backform liegt der Neigungswinkel im Bereich zwischen 2° bis 4°.

Eine im Hinblick auf ein besonders rasches Ausbreiten der in dem Backraum aufgenommenen Füllmasse vorteilhafte Ausführungsform der Backform ist im besonderen dadurch gegeben, daß in zumindest einer der Schließflächen, insbesondere der Schließfläche des Formoberteiles, Abdampfkanäle ausgebildet sind. Dadurch wird auf vorteilhafte Weise sichergestellt, daß sich unmittelbar nach Schließen der Formteile bzw. Einbringen der Füllmasse entwickelnde Dampfmenge rasch aus dem Backraum abströmen kann, so daß das in dem Backraum befindliche Füllmaterial ebenfalls rasch bis an den Schließspalt der beiden Formhälten hin vordringen kann.

Die Abdampfkanäle sind nach einer bevorzugten Ausführungsform der Erfindung im wesentlichen in gleichem Abstand in Umfangsrichtung der Umfangs-Formkontur angeordnet. Dadurch wird es auf günstige Weise möglich, entlang der Umfangs-Formkontur eine im wesentlichen gleichmäßige Dampfabström-Charakteristik zu gewährleisten, so daß an dem Randbereich des erzeugten Formteiles eine gleichmäßige Struktur erreicht wird.

Nach einem weiteren Ausführungsbeispiel der Erfindung ist eine besonders vorteilhafte Ausführungsform der Backform dadurch gegeben, daß der Abdampfkanal einen keilförmigen, hinsichtlich seiner Querschnittsfläche veränderlichen Querschnitt aufweist. In besonders vorteilhafter Weise weist dabei jeder Abdampfkanal an seinem, dem Backraum zugewandten Anfangsbereich einen relativ kleinen Querschnitt auf, welcher sich in seinem Verlauf von dem Backraum weg nach außen hin erweitert. Dadurch wird auf einfache Weise ein gutes Ausströmverhalten erreicht und ein Verschmutzen bzw. Verstopfen der jeweiligen Abdampfkanäle verhindert, da ein ggf. in den Abdampfkanal eingedrungener, festgebackener Füllmaterialabschnitt in dem Abdampfkanal kaum Widerhalt findet.

Gemäß einer bevorzugten Ausführungsform der Erfindung sind Abdampfkanäle in einer im wesentlichen vertikalen Orientierung angeordnet. Derartige Abdampfkanäle ermöglichen ein besonders günstiges Abströmen des in dem Backraum entstehenden Dampfes.

Eine unter fertigungstechnischen Gesichtspunkten sowie im Hinblick auf ein einfaches Reinigen der Abdampfkanäle besonders vorteilhafte Ausführungsform der Erfindung ist dadurch gegeben, daß die Abdampfkanäle in der Schließfläche des Formoberteiles ausgenommen sind und sich in vertikaler Richtung von der Umfangsformkontur des Formoberteiles nach oben erweitern. Dadurch wird es auf vorteilhafte Weise möglich, einen ggf. hinsichtlich Verschmutzung kritischen Anfangsbereich der Abdampfkanäle auf einfache Weise zu reinigen. Zudem tritt in besonders günstiger Weise ein Selbsreinigungseffekt auf, da infolge einer Relativbewegung zwischen Formoberteil und Formunterteil beim Öffnen der Backform ggf. im Anfangsbereich der Abdampfkanäle befindliche Verunreinigungen aus diesen Abdampfkanälen herausgeschoben werden.

Eine hinsichtlich des Betriebsverhaltens der Backform weiterhin besonders vorteilhafte Ausführungsform der Abdampfkanäle ist dadurch gegeben, daß eine Basislinie der Abdampfkanäle unter einem Winkel zwischen 0° und etwa 15° geneigt zur Vertikalen verläuft. Kleinere Winkel im Bereich zwischen 0° bis etwa 7° finden dabei bevorzugt Anwendung bei Ausführungsformen der Backform, bei welchen ein relativ großer Neigungswinkel a zwischen den Schrägflächen von Formober- und Formunterteil ausgebildet ist. Größere Neigungswinkel der Basislinie der Abdampfkanäle relativ zur Vertikalen finden bevorzugt bei Ausführungsformen der Backform mit relativ kleinem Neigungswinkel α Anwendung. Durch die willkürliche Festlegung des Winkels zwischen einer Basislinie der Abdampfkanäle und der Vertikalen kann in besonders feinfühliger Weise sowohl auf den durch den Abdampfkanal möglichen Druckabbau als auch auf die Vermschmutzungsempfindlichkeit des Abdampfkanales Einfluß genommen werden.

Eine besonders vorteilhafte Ausführungsform der Backform ist dadurch gegeben, daß das nicht-eintauchende Formober- oder Formunterteil entlang seiner Umfangs-Formkontur eine geneigte Schutzfase mit einer Breite zwischen etwa 0,5 mm und 1 mm aufweist. Dadurch wird in günstiger Weise vermieden, daß die beiden Formteile bei einem unsachgemäßen Zusammenfügen beschädigt werden.

Die Erfindung wird nachstehend anhand eines Ausführungsbeispiels und zugehörigen Zeichnungen näher erläutert. In diesen zeigen:
- Fig.1: eine Schnittdarstellung einer Backform gemäß einer ersten Ausführungsform der Erfindung mit an der Kernform angeordnetem Abdampfkanal;
- Fig.2: eine Detail-Schnittdarstellung eines Schließspaltbereiches als Ausschnittbild zu Fig.1;
- Fig.3: eine weitere Ausführungsform mit Abdampfkanal an der Hohlform;
- Fig.4: eine Detaildarstellung zu Fig.3.

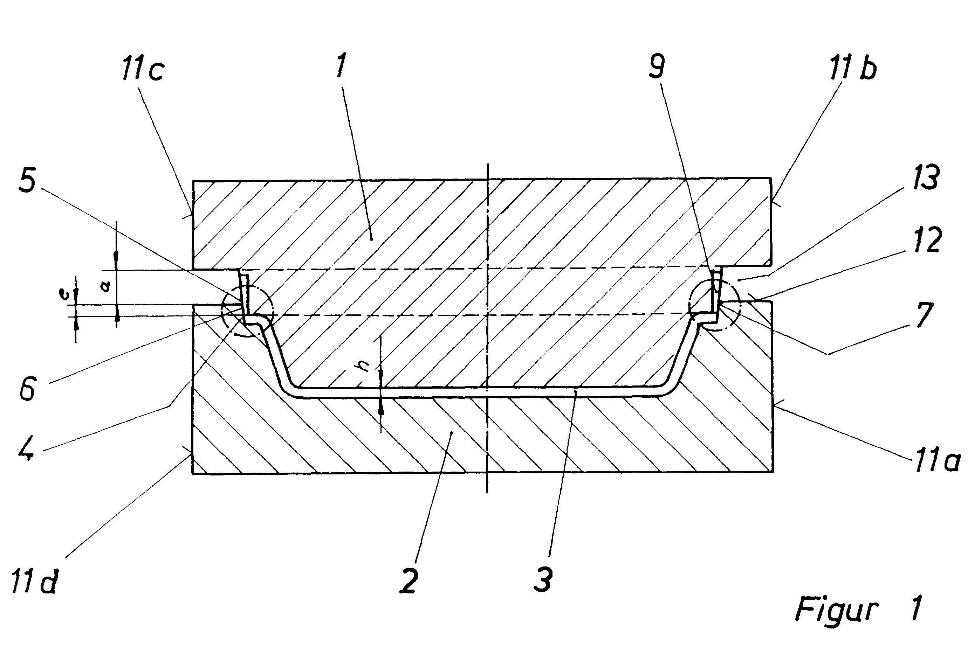

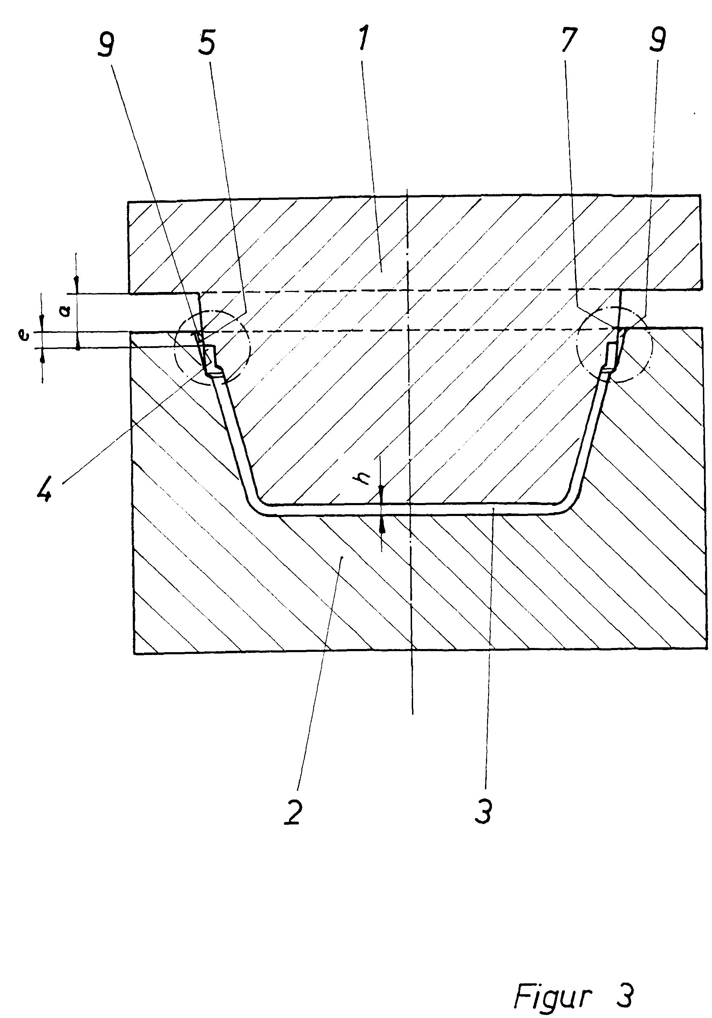

Die in Figuren 1 und 3 jeweils dargestellten Backformen umfassen jeweils ein Formoberteil 1 und ein Formunterteil 2, zwischen welchen bei geschlossener Backform ein Backraum 3 begrenzt ist. Bei der in Figuren 1 und 3 geschlossen dargestellten Backform ist das Formoberteil 1 entlang einer Umfangs-Formkontur 4 in das Formunterteil 2 entsprechend einem Maß "e" eingetaucht, vorzugsweise beträgt die Eintauchtiefe 3-4 mm.

In dem Backraum 3 wird ein in diesen eingebrachtes Teigmaterial z.B. zur Herstellung eines Verpackungsformkörpers auf Zellulose-Stärke-Basis oder ein Waffelbackteig zu einem dünnwandigen Formteil ausgebacken. Das Formoberteil 1 und das Formunterteil 2 sind hierzu im Bereich des Backraumes 3 unter einem im wesentlichen gleichbleibenden Abstand h voneinander beabstandet angeordnet. Dies wird durch - hier nicht dargestellte - Distanzelemente zwischen Formober- und Formunterteil 1,2 gewährleistet.

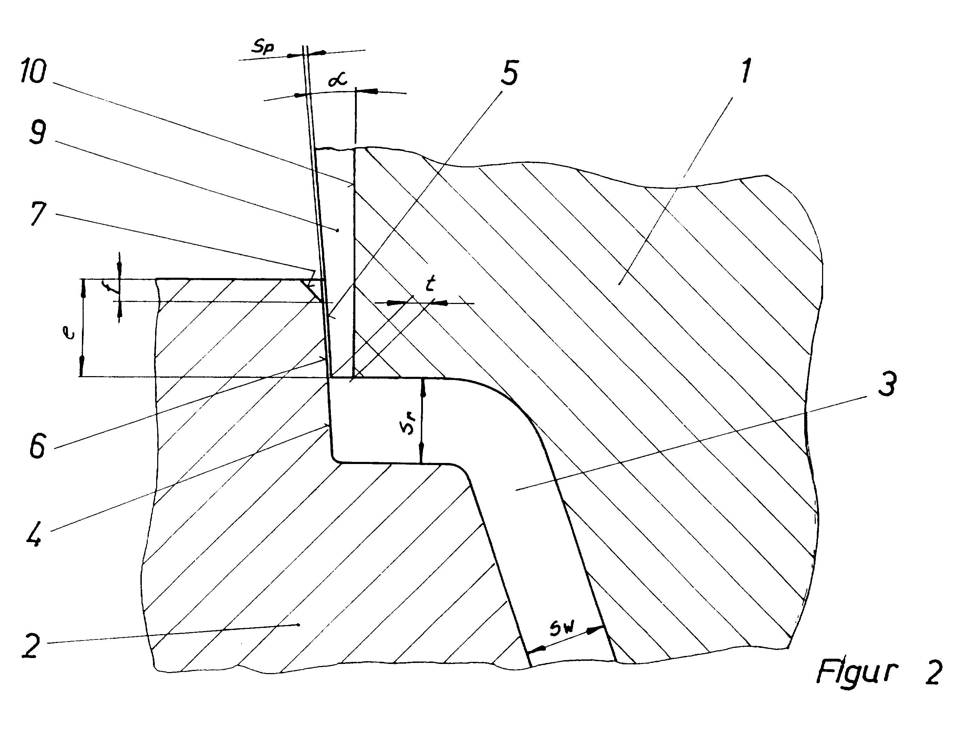

Der Backraum 3 ist in seinem Außenumfangsbereich von der Umfangs-Formkontur 4 unter Bildung eines mit dem Backraum 3 kommunizierenden Schließspaltes Sp umschlossen. Der Schließspalt Sp wird durch eine an dem Formoberteil 1 ausgebildete obere Schließfläche 5 (siehe Fig.2 bis 4) und eine dem Formunterteil 2 zugeordnete untere Schließfläche 6 gebildet. Beide Schließflächen sind im wesentlichen neigungsgleich, zueinander im geschlossenen Zustand der Backform parallel verlaufend, ausgebildet.

Der zwischen der oberen Schließfläche 5 und der unteren Schließfläche 6 gebildete Schließspalt Sp weist über den überwiegenden Teil seiner Breite eine im wesentlichen konstante Spaltbreite von etwa 0,01 bis 0,05 mm, vorzugsweise 0,02 bis 0,03 mm, auf. Der Neigungswinkel des zwischen Formoberteil 1 und Formunterteil 2 gebildeten Schließspaltes Sp beträgt gemäß der hier dargestellten bevorzugten Ausführungsform ca. 5°. Unmittelbar im Anschluß an den Schließspalt Sp ist an dem Formunterteil 2 eine Schutzfase 7 von vorzugsweise 0,6 bis 0,8 x 45° ausgebildet.

In der ersten Ausführungsform gemäß Fig.1 und 2 ist das Formoberteil 1 mit Abdampfkanälen 9 versehen, welche den Backraum 3 mit der Umgebung der Backform verbinden und sich hinsichtlich ihrer Querschnitte vom Backraum 3 ausgehend zur Umgebung der Backform hin kontinuierlich erweitern. Die Abdampfkanäle 9 sind hierbei jeweils als schmaler Einschnitt ausgebildet. Die Tiefe (t) des Abdampfkanales 9 in seinem Mündungsbereich zum Backraum beträgt vorzugsweise 0,5 bis 1,5 mm. Die Anzahl der Abdampfkanäle 9 ist in Abhängigkeit von dem Backraumvolumen festgelegt. Die einzelnen Abdampfkanäle 9 sind entlang der Umfangs-Formkontur im wesentlichen gleichmäßig beabstandet angeordnet.

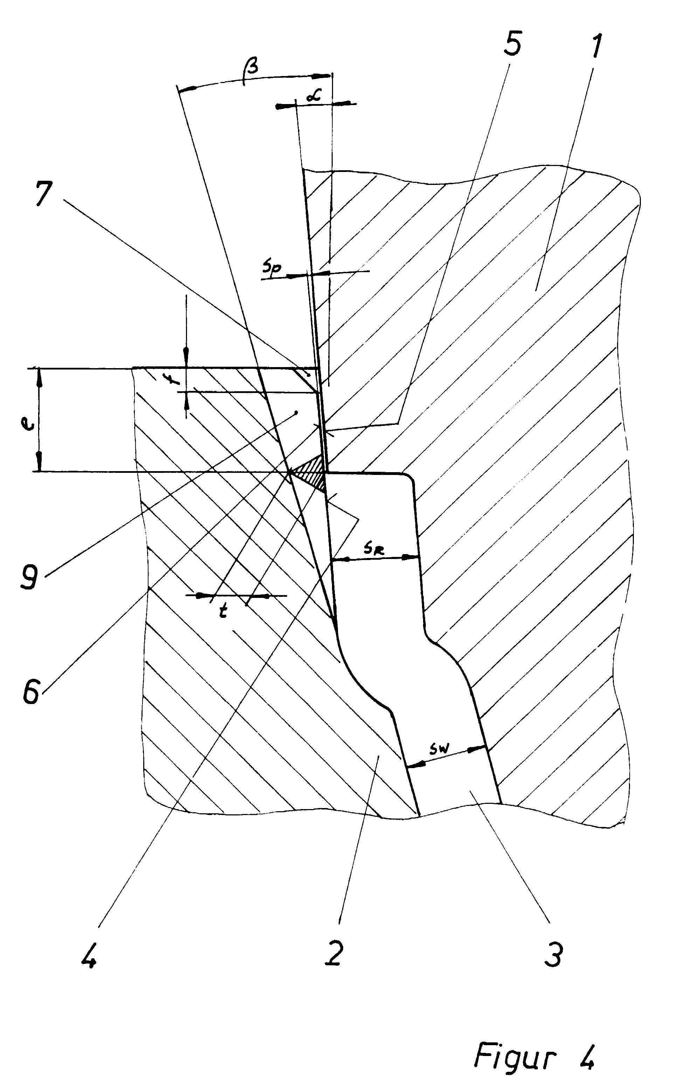

In der Ausführungsform gemäß Fig. 3 und 4 sind im Unterschied zur Ausführungsform gemäß Fig.1 und 2 die Abdampfkanäle 9 in der Schließkontur des Formunterteiles 2 (Hohlform) angeordnet. Die Abdampfkanäle 9 der zweiten Ausführungsform gemäß Fig.3 und 4 weisen, wie aus der Detail-Darstellung nach Fig.4 hervorgeht, vorzugsweise einen Dreiecks-Querschnitt auf. Ferner ragen die Abdampfkanüle 9 vorzugsweise um die ca. 1 bis 2 fache Eintauchtiefe (e) in den Backraum 3 hinein. Diese Ausführungsform ist vorteilhaft dort anzuwenden, wo die Planseite des Formteiles frei von Abrißstellen innerhalb des Formkernes bleiben soll. Weiterhin ermöglicht diese Form einen günstigen Anstellwinkel α für die Einbringung des Abdampfkanals und damit ein verbessertes Ausströmverhalten für Wasserdampf und evtl. überschüssige Formasse.

Die Schließfläche 6 des Formunterteils 2 begrenzt gemeinsam mit den Außenseitenflächen 11a,11d der Backform eine Umfangsfläche 12 von relativ großer Breite. Diese Umfangsfläche 12 bildet bei geschlossener Backform eine Innenfläche eines Umfangsraumes 13, welcher von dem Formoberteil 1 und der Umfangsfläche 12 bzw. dem Formunterteil 2 begrenzt wird. In diesen Umfangsraum 13 münden die entlang der Umfangs-Formkontur 4 ausgebildeten Abdampfkanäle 9. Eine Höhe a des Umfangsraumes 13 entspricht in etwa der zweifachen Überlagerungsbreite der oberen Schließfläche 5 und der unteren Schließfläche 6 vorzugsweise von 6 - 8 mm. Die Umfangsfläche 12 ist bei der hier dargestellten Ausführungsform als im wesentlichen plane Fläche ausgebildet. Es ist jedoch auch möglich, diese Fläche insbesondere nach außen hin abfallend auszubilden, so daß ggf. aus den Abdampfkanälen 9 herausgeblasene Partikel infolge ihres Eigengewichts selbsttätig von der Umfangsfläche 12 abgleiten bzw. in vermindertem Maße dazu neigen, beim Öffnen der Backform in das Formunterteil 2 zurückzufallen.

Die Abdampfkanäle 9 begünstigen in Verbindung mit der vorgeschlagenen Schließkontur den gleichmäßigen Druckaufbau im Inneren des Backraumes 3, eine gleichmäßige Masseverteilung im Backraum und eine rasche Ableitung des sich bildenden Wasserdampfes. Dieser Wasserdampf entweicht überwiegend durch die Abdampfkanäle 9. Gemeinsam mit dem abströmenden Wasserdampf kann auch geringfügig überschüssig in den Backraum eingebrachte Masse bläschenartig aus den Abdampfkanälen 9 herausgetrieben werden, ohne sich festhaftend an dem Formoberteil 1 abzulagern. Die Bemessung der Abdampfkanäle 9 bezüglich ihrer Anordnung und Anzahl kann verfahrens- und formspezifisch festgelegt werden und ggf. nach Ablauf eines ersten Probeversuches empirisch optimiert werden. Zur Optimierung von Anzahl und Anordnung der Abdampfkanäle 9 wird hierbei das Formoberteil 1 von dem Formunterteil 2 abgenommen und entsprechend nachgearbeitet. Der Gesamtdurchlaßquerschnitt aller Abdampfkanäle 9 wird im Hinblick auf das Volumen des Backraumes 3 festgelegt. Der Erweiterungswinkel α der Abdampfkanäle wird derart festgelegt, daß ggf. durch die Abdampfkanäle 9 hindurchgeförderte Partikel im wesentlichen keinen Druckaufbau in dem jeweiligen Abdampfkanal 9 hervorrufen können.

Die eigentliche Zentrierung des Formoberteiles 1 relativ zu dem Formunterteil 2 erfolgt durch eine Führungseinrichtung (nicht dargestellt), welche bereits vor Eintreten der beiden Formteile 1 und 2 in eine Schließstellung über eine vorgegebene Führungsstrecke hinweg wirksam ist. Diese Führungseinrichtung kann z.B. eine Anzahl von vorzugsweise (2-4) Führungssäulen umfassen, welche in auswechselbarer Weise mit dem Formoberteil 1 verbunden sind und in entsprechend in dem Formunterteil 2 ausgebildete Führungsbuchsen eintreten können.

Eine derartige Präzisions-Führungseinrichtung kann auch in Verbindung mit den Backzangen ausgebildet sein, in denen die Backformen entsprechend montiert sind. Bei einer entsprechend präzisen Führung der beiden Formoberteile 1 und 2 zueinander wird es auf vorteilhafte Weise möglich, ein Inkontakttreten der beiden Formteile 1 und 2 im Bereich der Schließflächen miteinander vollständig zu verhindern wodurch ein entsprechender Verschleiß der beiden Formteile auf vorteilhafte Weise vermieden wird.

Die Backform und insbesondere die hierfür vorgeschlagene Schließkontur eignet sich besonders zur Herstellung dünnwandiger Formteile und ermöglicht eine, von Rezeptur bedingten Faktoren abgesehen, extrem zuverlässige Fertigung dünnwandiger Formteile. Dies wird durch die vorgeschlagene Schließkontur und das Eintauchen zwischen Formober- und Formunterteil unter Bildung der Schließflächen erreicht und durch die Ausbildung und Anordnung der Abdampfkanäle 9 unterstützt. Durch die vorgeschlagene Schließkontur in Verbindung mit den Abdampfkanälen kann auf günstige Weise der zum Ablauf des Backprozesses erforderliche Druckaufbau präzise gewährleistet und ein unkontrollierter Masseaustritt vermieden werden. Ferner wird selbst bei relativ hohen Backdrücken von ca. 4 bar und höheren Backtemperaturen der gewünschte Schließeffekt sicher gewährleistet. Da in dem maßgeblichen Spaltbereich das Formoberteil nicht mit dem Formunterteil in Berührungskontakt tritt, tritt in diesem kritischen Bereich kein Reibverschleiß auf, so daß die durch den Spaltbereich festgelegte Abströmcharakteristik über einen extrem langen Zeitraum unverändert erhalten bleibt. Aufgrund des vorgeschlagenen geringen Spaltmaßes erhält man zudem an dem entsprechenden Formteil im Bereich der Umfangsformkontur eine äußerst saubere Formteilkante.

Die Backform ist im Bereich ihrer Schließkontur mit einer erhöhten Genauigkeit gefertigt. In vorteilhafter Weise durchlaufen mehrere derartige Präzisionsbackformen einen Waffelbackautomaten bzw. einen im wesentlichen gleichgearteten Automaten zur Herstellung von Formteilen auf Zellulose- oder Stärkebasis.

Die Backformgestaltung ist nicht auf die vorangehend beschriebenen bevorzugten Ausführungsbeispiele beschränkt. Beispielsweise ist es auch möglich, die Abdampfkanäle in verschiedenen prismatischen, halbrunden und konisch ausgelegten Querschnitten auszubilden.

Ebenso schließt die Erfindung eine Anwendung auf Umfangskonturen mit schräg liegenden Oberkanten wie auch in verschiedenen Formteilabschlußebenen ein.

## Patentansprüche

1. Backform, die ein Formoberteil (1) und ein Formunterteil (2) aufweist, wobei zwischen dem Formoberteil (1) und dem Formunterteil (2) bei geschlossener Backform ein Backraum (3) begrenzt ist, wobei bei geschlossener Backform das Formoberteil (1) entlang einer Umfangs-Formkontur (4) in das Formunterteil (2) eingetaucht oder das Formunterteil (2) entlang einer Umfangs-Formkontur (4) in das Formoberteil (1) eingetaucht ist.

2. Backform nach Anspruch 1, **dadurch gekennzeichnet,** daß sich an die Umfangs-Formkonturen (4) von Formober- und Formunterteil (1;2) im wesentlichen neigungsgleiche Schließflächen (5;6) anschließen.

3. Backform nach Anspruch 1 oder 2, **dadurch gekennzeichnet,** daß bei geschlossener Backform zwischen den korrespondierenden Schließflächen (5;6) von Formober- und Formunterteil (1;2) ein Schließspalt (Sₚ) von etwa 0,01 mm - 0,05 mm vorgesehen ist.

4. Backform nach zumindest einem der vorhergehenden Ansprüche 1 - 3, **dadurch gekennzeichnet,** daß eine Eintauchtiefe (e) des Formoberteiles (1) in das Formunterteil (2)oder des Formunterteiles (2) in das Formoberteil (1) etwa 2 mm - 5 mm beträgt.

5. Backform nach zumindest einem der vorhergehenden Ansprüche 2 - 4, **dadurch gekennzeichnet,** daß ein Neigungswinkel (α) der Schrägflächen von Formober- und Formunterteil (1;2) etwa 1,5° - 5° beträgt.

6. Backform nach zumindest einem der vorhergehenden Ansprüche 2 - 5, **dadurch gekennzeichnet**, daß in zumindest einer der Schließflächen (5;6), insbesondere der Schließfläche (5) des Formoberteiles (1), Abdampfkanäle (9) ausgenommen sind.

7. Backform nach Anspruch 6, **dadurch gekennzeichnet,** daß die Abdampfkanäle (9) in im wesentlichen gleichen Abstand in Umfangsrichtung der Umfangs-Formkontur (4) angeordnet sind.

8. Backform nach Anspruch 6 oder 7, **dadurch gekennzeichnet,** daß der Abdampfkanal (4) einen keilförmigen, hinsichtlich seiner Querschnittsfläche veränderlichen Querschnitt aufweist.

9. Backform nach zumindest einem der vorhergehenden Ansprüche 6 - 8, **dadurch gekennzeichnet**, daß die Abdampfkanäle (9) in einer im wesentlichen vertikalen Orientierung angeordnet sind.

10. Backform nach zumindest einem der vorhergehenden Ansprüche 6 - 9, **dadurch gekennzeichnet,** daß die Abdampfkanäle (9) in der Schließfläche (5) des Formoberteiles (1) oder Formunterteiles (2) ausgenommen sind und sich in vertikaler Richtung von der Umfangs-Formkontur (4) des Formoberteiles (1) oder Formunterteiles (2) nach oben erweitern.

11. Backform nach zumindest einem der vorhergehenden Ansprüche 6 - 10, **dadurch gekennzeichnet,** daß eine Basislinie der Abdampfkanäle (9) unter einem Winkel zwischen 0° und etwa 15° geneigt zur Vertikalen verläuft.

12. Backform nach zumindest einem der vorhergehenden Ansprüche 1 - 11, **dadurch gekennzeichnet,** daß das nicht-eintauchende Formmober- oder Formunterteil (1;2) entlang seiner Umfangs-Formkontur (4) eine geneigte Schutzfase mit einer Tiefe (f) zwischen etwa 0,5 mm und 1 mm aufweist.

## Claims

1. Baking mould comprising a top mould part (1) and a bottom mould part (2), wherein a baking space (3) is defined between the top mould part (1) and the bottom mould part (2) when the baking mould is closed, wherein, with the baking mould closed, the top mould part (1) is inserted in the bottom mould part (2) along a circumferential mould contour (4) or the bottom mould part (2) is inserted in the top mould part (1) along a circumferential mould contour (4).

2. Baking mould according to Claim 1, characterised in that closing faces (5; 6), substantially of the same inclination, adjoin the circumferential mould contours (4) of the top mould and bottom mould part (1; 2).

3. Baking mould according to Claim 1 or 2, characterised in that a closing gap (Sp) of approximately 0.01 mm - 0.05 mm is provided between the corresponding closing faces (5; 6) of the top mould and bottom mould part (1; 2) when the baking mould is closed.

4. Baking mould according to at least one of the preceding Claims 1 - 3, characterised in that a depth of insertion (e) of the top mould part (1) in the bottom mould part (2) or the bottom mould part (2) in the top mould part (1) is approximately 2 mm - 5 mm.

5. Baking mould according to at least one of the preceding Claims 2 - 4, characterised in that an angle of inclination (α) of the oblique faces of the top mould and bottom mould part (1; 2) is approximately 1.5° to 5°.

6. Baking mould according to at least one of the preceding Claims 2 - 5, characterised in that waste steam channels (9) are made in at least one of the closing faces (5; 6), in particular the closing face (5) of the top mould part (1) .

7. Baking mould according to Claim 6, characterised in that the waste steam channels (9) are disposed at substantially equal spacings in the circumferential direction of the circumferential mould contour (4).

8. Baking mould according to Claim 6 or 7, characterised in that the waste steam channel (4) has a wedge-shaped cross section which varies with regard to its cross-sectional area.

9. Baking mould according to at least one of the preceding Claims 6 - 8, characterised in that the waste steam channels (9) are disposed in a substantially vertical direction.

10. Baking mould according to at least one of the preceding Claims 6 - 9, characterised in that the waste steam channels (9) are made in the closing face (5) of the top mould part (1) or bottom mould part (2) and widen upwards in the vertical direction from the circumferential mould contour (4) of the top mould part (1) or bottom mould part (2).

11. Baking mould according to at least one of the preceding Claims 6 - 10, characterised in that a base line of the waste steam channels (9) is inclined at an angle between 0° and approximately 15° with respect to the vertical.

12. Baking mould according to at least one of the preceding Claims 1 - 11, characterised in that the top mould or bottom mould part (1; 2) which is not inserted comprises an inclined protective chamfer of a depth (f) between approximately 0.5 mm and 1 mm along its circumferential mould contour (4).

## Revendications

1. Moule de cuisson, qui comprend une partie supérieure de moule (1) et une partie inférieure de moule (2), dans lequel une chambre de cuisson (3) est délimitée entre la partie supérieure (1) et la partie inférieure (2) lorsque le moule est fermé, et dans lequel lorsque le moule est fermé, la partie supérieure (1) plonge dans la partie inférieure (2) le long d'un contour périphérique conformé (4), ou bien la partie inférieure (2) plonge dans la partie supérieure (1) le long d'un contour périphérique conformé (4).

2. Moule de cuisson selon la revendication 1, caractérisé en ce que les contours périphériques conformés (4) de la partie supérieure et de la partie inférieure (1 ; 2) sont suivis par des surfaces de fermeture (5 ; 6) présentant sensiblement des inclinaisons égales.

3. Moule de cuisson selon l'une ou l'autre des revendications 1 et 2, caractérisé en ce que lorsque le moule est fermé, il est prévu entre les surfaces de fermeture correspondantes (5 ; 6) de la partie supérieure et de la partie inférieure (1 ; 2) du moule un intervalle de fermeture (Sp) d'environ 0,01 à 0,05 mm.

4. Moule de cuisson selon l'une au moins des revendications 1 à 3, caractérisé en ce que la profondeur de plongée (e) de la partie supérieure (1) dans la partie inférieure (2) du moule, ou bien de la partie inférieure (2) dans la partie supérieure (1) du moule, est d' environ 2 à 5 mm.

5. Moule de cuisson selon l'une au moins des revendications 2 à 4, caractérisé en ce que l'angle d'inclinaison (α) des surfaces obliques de la partie supérieure et de la partie inférieure (1 ; 2) du moule est d' environ 1,5 à 5°.

6. Moule de cuisson selon l'une au moins des revendications 2 à 5, caractérisé en ce que des canaux d'échappement de vapeur (9) sont ménagés dans l'une au moins des surfaces de fermeture (5 ; 6), en particulier dans la surface de fermeture (5) de la partie supérieure du moule (1).

7. Moule de cuisson selon la revendication 6, caractérisé en ce que les canaux d'échappement de vapeur (9) sont agencés à distance sensiblement égale dans la direction périphérique du contour périphérique conformé (4).

8. Moule de cuisson selon l'une ou l'autre des revendications 6 et 7, caractérisé en ce que le canal d'échappement de vapeur (4) présente une section en forme de coin, variable quant à sa surface de section transversale.

9. Moule de cuisson selon l'une au moins des revendications 6 à 8, caractérisé en ce que les canaux d'échappement de vapeur (9) sont agencés sous une orientation sensiblement verticale.

10. Moule de cuisson selon l'une au moins des revendications 6 à 9, caractérisé en ce que les canaux d'échappement de vapeur (9) sont ménagés dans la surface de fermeture (5) de la partie supérieure (1) ou de la partie inférieure (2) du moule, et vont en s'élargissant vers le haut en direction verticale depuis le contour périphérique conformé (4) de la partie supérieure (1) ou de la partie inférieure (2) du moule.

11. Moule de cuisson selon l'une au moins des revendications 6 à 10, caractérisé en ce qu'une ligne de base des canaux d'échappement de vapeur (9) s'étend de façon inclinée par rapport à la verticale, sous un angle compris entre 10 et environ 15°.

12. Moule de cuisson selon l'une au moins des revendications 1 à 11, caractérisé en ce que, parmi la partie supérieure et la partie inférieure (1 ; 2) du moule, celle qui ne plonge pas présente le long de son contour périphérique conformé (4) un chanfrein de protection incliné avec une profondeur (f) comprise entre environ 0,5 et 1 mm.
